# EUROPÄISCHE PATENTSCHRIFT

(11) **EP 0 575 925 B1**
(45) Veröffentlichungstag und Bekanntmachung des Hinweises auf die Patenterteilung: **09.10.1996**
(21) Anmeldenummer: 93109841.2
(22) Anmeldetag: 21.06.1993
(51) Int. Cl.: C09B 67/54, C09B 67/10

(54) **Verfahren zur Reinigung von Indigo**
Method for purification of indigo
Procédé de purification de l'indigo

(30) Priorität: 25.06.1992 DE 4220804
(43) Veröffentlichungstag der Anmeldung: 29.12.1993
(73) Patentinhaber: BASF Aktiengesellschaft, 67063 Ludwigshafen (DE)
(72) Erfinder: Kohlhaupt, Reinhold, Dr., W-6710 Frankenthal (DE); Bergmann, Udo, Dr., W-6140 Bensheim (DE)

(56) Entgegenhaltungen:
- EP-A- 0 036 523
- EP-A- 0 101 061
- DE-A- 3 522 680

## Beschreibung

Indigo, der mengenmäßig weltweit größte synthetische Textilfarbstoff, enthält trotz ausgereifter Produktionsverfahren noch Verunreinigungen, so z.B. bis zu 0,6 Gew.-% Anilin und 0,4 Gew.-% N-Methylanilin. Ferner sind in noch geringeren Mengen weitere Verbindungen enthalten, die man gerne entfernen möchte.

Es war daher Aufgabe der vorliegenden Erfindung, ein wirkungsvolles und wirtschaftliches Verfahren zur Reinigung von Indigo zu entwickeln, nach welchem der Farbstoff frei oder zumindest sehr weitgehend frei von aromatischen Aminen und anderen Verunreinigungen erhalten wird.

Versuche, die im Indigo vorhandenen aromatischen Amine durch bekannte Reinigungsverfahren, z.B. durch Waschen oder durch Ausrühren mit verdünnten Säuren, durch Wasserdampfdestillation oder durch Extraktion mit organischen Lösungsmitteln zu entfernen, waren bisher nicht erfolgreich, selbst nicht mit feinstgemahlenem Farbstoff.

Gemäß EP-A-509 274 erhält man sehr weitgehend gereinigten Indigo, wenn man den Farbstoff nach der Synthese zunächst in sein Sulfat überführt, ihn dann durch Hydrolyse wieder freisetzt und den so zurückgewonnenen Indigo anschließend einer Wasserstoffperoxidbehandlung unterzieht.

Es wurde nun gefunden, daß man auch weitgehend gereinigten Indigo erhält, wenn man den Farbstoff nach der Synthese mit einem organischen Lösemittel bei höherer Temperatur behandelt.

Die Wirksamkeit des neuen Verfahrens zur Reinigung von Indigo ist überraschend und war nicht vorhersehbar, da bei bisherigen Versuchen zur Behandlung von Indigo mit organischen Lösungsmitteln wie Methanol, n-Butanol und Toluol selbst unter Rückflußbedingungen kein Reinigungseffekt erzielt werden konnte.

Für die Behandlung mit organischen Lösemitteln können sowohl wasserhaltiger Indigoteig als auch der getrocknete Farbstoff eingesetzt werden.

Die für die Reinigung benötigte Lösemittelmenge beträgt das ungefähr 3- bis 12fache des Trockengewichtes des eingesetzten Farbstoffes.

Indigo ist in allen organischen Lösemitteln sehr schwer löslich, so daß der Farbstoff auch noch bei diesen Gewichtsverhältnissen von Feststoff:Lösemittel nahezu ungelöst in Suspension vorliegt.

Das erfindungsgemäße Verfahren kann besonders vorteilhaft so durchgeführt werden, daß man 1 Teil Indigopulver oder 4 Teile wäßrigen Indigoteig (Trockengehalt: 25 %) in 3 bis 12 Teile, bevorzugt 5 bis 9 Teile, eines organischen Lösemittels einträgt und unter Rühren 2 bis 12 Stunden, bevorzugt 4 bis 8 Stunden, bei 150 bis 250°C, bevorzugt bei 180 bis 220°C, behandelt, wobei im Falle der Verwendung von wäßrigem Indigoteig zunächst das vorhandene Wasser abdestilliert wird.

Der nach der Aufarbeitung des Reaktionsansatzes in einer Ausbeute von über 99 % rückgewonnene und gereinigte Indigo (Reingehalt ≥ 98 %, fotometrisch gemessen) enthält nur noch 0 bis 0,08 % Anilin und 0 bis 0,04 % N-Methylanilin.

Das Verfahren kann drucklos und unter Druck, diskontinuierlich und kontinuierlich durchgeführt werden. Als Lösemittel eignen sich beispielsweise alle unter den Verfahrensbedingungen inerten Lösemittel wie Kohlenwasserstoffe, Halogenkohlenwasserstoffe, Ether, Ketone, Säureamide, Nitrile, Alkohole oder auch Ester oder Mischungen davon.

Bevorzugte Lösemittel sind insbesondere Benzoesäuremethylester, Dimethylformamid, Dimethylacetamid, N-Methylpyrrolidon und o-Dichlorbenzol.

Die zur Reinigung des Indigos verwendeten Lösemittel können wiederholt ohne vorherige Redestillation verwendet werden.

Die folgenden Beispiele sollen das Verfahren näher erläutern. Die genannten Teile und Prozentangaben beziehen sich auf das Gewicht.

### Beispiel 1

In einem 1-l-Rührreaktor werden 350 Teile Benzoesäuremethylester vorgelegt. Nach dem Einrühren von 50 Teilen Indigopulver (Reingehalt 96,5 %, Anilingehalt 0,6 %, Methylanilingehalt 0,35 %) wird das Reaktionsgemisch zum Rückfluß (198°C) erhitzt und 6 Stunden unter Rühren bei dieser Temperatur gehalten. Nach dem Abkühlen des Reaktionsansatzes auf Raumtemperatur wird filtriert. Das erhaltene Filtergut wird nach dem Eintragen in 300 Teile Wasser durch Wasserdampfdestillation von anhaftendem Benzoesäuremethylester befreit. Nach dem Trocknen unter vermindertem Druck bei 100°C werden 48,5 Teile Indigo mit einem Reingehalt von 98,6 % (fotometrisch gemessen) erhalten.

Die Ausbeute beträgt 47,82 Teile Indigo ber. 100 % = 99,2 % d. Th. Der Indigo enthält noch 0,014 % Anilin und < 0,001 % N-Methylanilin.

Das Filtrat kann bis zu zweimal ohne Redestillation zur Reinigung von Indigo wiederverwendet werden.

### Beispiel 2

In einem 2-l-Rührreaktor mit aufgesetzter Destillationsbrücke werden 700 Teile Benzoesäuremethylester vorgelegt. Nach dem Einrühren von 370 Teilen wäßrigem Indigoteig (Trockengehalt: 27,9 %; Reingehalt des getrockneten Indigos: 97,0 % bei 0,55 % Anilin und 0,35 % N-Methylanilin) wird die erhaltene Suspension auf ca. 195°C erhitzt, wobei in 2 Stunden das vorhandene Wasser quantitativ abdestilliert. Nach dem Austausch der Destillationsbrücke gegen einen Rückflußkühler wird der Reaktionsansatz für die Dauer von 6 Stunden unter Rückfluß auf 198°C erhitzt.

Die Indigosuspension wird dann abgekühlt und wie unter Beispiel 1 beschrieben aufgearbeitet, wobei 100,8 Teile Indigo mit einem Reingehalt von 98,2 % (fotom.) erhalten werden.

Die Ausbeute beträgt 99,0 Teile Indigo ber. 100 %, entsprechend 99 % des für die Reinigung eingesetzten Indigos. Der Farbstoff enthält noch 0,04 % Anilin und 0,02 % N-Methylanilin.

### Beispiel 3

In einem 2-1-Rührdruckreaktor werden 700 Teile Benzoesäuremethylester und 370 Teile wäßriger Indigoteig der Qualität des Beispiels 2 eingefüllt. Nach dem Verschließen des Druckreaktors wird der Reaktionsansatz unter Rühren auf 200°C erhitzt, wobei sich ein Reaktorinnendruck von 15 bar aufbaut. Nach 5stündigem Rühren bei 200°C/15 bar wird der Druckreaktor nach Kühlung der Indigosuspension auf Raumtemperatur geöffnet.

Nach der Filtration wird der rückgewonnene Indigo wie in Beispiel 1 beschrieben aufgearbeitet. Erhalten werden 99,6 Teile Indigo mit einem Reingehalt von 99,7 % (fotom.), entsprechend einer Ausbeute von 99,3 % des für die Reinigung eingesetzten Indigos. Der Farbstoff enthält 0,01 % Anilin und 0,005 % N-Methylanilin.

## Patentansprüche

1. Verfahren zur Reinigung von Indigo, dadurch gekennzeichnet, daß man den Indigo in einem inerten organischen Lösungsmittel auf 150 bis 250°C, bevorzugt 180 bis 220°C, erhitzt.

2. Verfahren gemäß Anspruch 1, dadurch gekennzeichnet, daß man 1 Teil Indigo in 3 bis 12 Teilen, bevorzugt 5 bis 9 Teilen, eines organischen Lösemittels suspendiert.

3. Verfahren gemäß Anspruch 1, dadurch gekennzeichnet, daß man die Reinigungsoperation in 2 bis 12 Stunden, bevorzugt in 6 bis 10 Stunden, durchführt.

4. Verfahren gemäß Anspruch 1, dadurch gekennzeichnet, daß man Benzoesäuremethylester als Lösemittel verwendet.

## Claims

1. A process for purifying indigo, characterized in that the indigo is heated in an inert organic solvent to from 150 to 250°C, preferably to from 180 to 220°C.

2. A process as claimed in claim 1, characterized in that 1 part of indigo is suspended in from 3 to 12 parts, preferably in from 5 to 9 parts, of an organic solvent.

3. A process as claimed in claim 1, characterized in that the purifying operation is carried out for from 2 to 12 hours, preferably for from 6 to 10 hours.

4. A process as claimed in claim 1, characterized in that the solvent used is methyl benzoate.

## Revendications

1. Procédé de purification d'indigo, caractérisé en ce que l'on chauffe l'indigo dans un solvant organique inerte à une température de 150 à 250°C, de préférence de 180 à 220°C.

2. Procédé selon la revendication 1, caractérisé en ce que l'on met en suspension 1 partie d'indigo dans 3 à 12 parties, de préférence 5 à 9 parties d'un solvant organique.

3. Procédé selon la revendication 1, caractérisé en ce que l'opération de purification est effectuée en 2 à 12 h, de préférence en 6 à 10 h.

4. Procédé selon la revendication 1, caractérisé en ce que l'on utilise de l'ester méthylique d'acide benzoïque comme solvant.
